(19) Europäisches Patentamt
European Patent Office
Office européen des brevets

(11) **EP 4 088 884 A1**

(12) **EUROPEAN PATENT APPLICATION**

(43) Date of publication:
**16.11.2022 Bulletin 2022/46**

(21) Application number: **21173491.8**

(22) Date of filing: **12.05.2021**

(51) International Patent Classification (IPC):
**B25J 9/16** *(2006.01)*     **B25J 5/00** *(2006.01)*
**G05D 1/02** *(2020.01)*     **G06N 20/00** *(2019.01)*

(52) Cooperative Patent Classification (CPC):
**B25J 9/162; B25J 5/007; B25J 9/1697;**
**G05D 1/0088; G05D 1/024; G05D 1/0246;**
**G05D 1/0274; G06N 20/00;** G05B 2219/37521;
G05B 2219/37558; G05B 2219/40298;
G05B 2219/40532; G05B 2219/40576;
G05B 2219/45058; G05D 2201/0202

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Hilti Aktiengesellschaft**
**9494 Schaan (LI)**

(72) Inventors:
• **Kumar, Nitish**
**9470 Buchs (CH)**

• **Korl, Sascha**
**9470 Buchs (CH)**
• **Bartolomei, Luca**
**21050 Cantello (IT)**
• **Teixeira, Lucas**
**8050 Zürich (CH)**
• **Chli, Margarita**
**8037 Zürich (CH)**

(74) Representative: **Hilti Aktiengesellschaft**
**Corporate Intellectual Property**
**Feldkircherstrasse 100**
**Postfach 333**
**9494 Schaan (LI)**

(54) **METHOD OF ACQUIRING SENSOR DATA ON A CONSTRUCTION SITE, CONSTRUCTION ROBOT SYSTEM, COMPUTER PROGRAM PRODUCT, AND TRAINING METHOD**

(57)     The invention relates to a method (10) of acquiring sensor data on a construction site (101) by at least one sensor of a construction robot system (100) comprising at least one construction robot. According to the invention a sensor is controlled using a trainable agent (14), thus improving the quality of acquired sensor data. Furthermore, the invention also concerns a construction robot system (100), a computer program product (108), and a training method.

Fig. 1

EP 4 088 884 A1

**Description**

The present invention relates to a Method of acquiring sensor data on a construction site.

The usefulness of a construction robot on a construction site increases with its autonomy. The degree to which autonomy may be achieved strongly depends on the quality of data that sensors of the construction robot may gather.

Particular problems in regard to sensing data on construction sites comprise dirt, varying lighting conditions, noise, uncertainty, in particular in regard to the correspondence of building information model (BIM) data, if existing at all, to the real construction site, and the like.

Moreover, as entities, e. g. human workers or construction objects like installation objects, may appear, disappear and / or move, gathering useable sensor data on the construction site is additionally complicated.

Therefore, it is an object of the present invention to provide robust methods and devices for acquiring sensor data on a construction site.

This is achieved in a number of aspects of the present invention, in which a first aspect is **a method of acquiring sensor data** on a construction site by at least one sensor of a construction robot system comprising at least one construction robot, wherein the sensor is controlled using a trainable agent.

One of the ideas behind the present invention is, thus, to incorporate learning, in particular selflearning, into an active perception, allowing a construction robot to learn how to adapt dynamically to the construction site such that the sensor data acquired reaches an improved or optimal quality.

Even physically given limits of sensor data quality may be overcome. For example, if the construction robot system is to measure distances between two cuboid construction objects, e. g. two opposing walls, using a LIDAR scanner while dust is in the air close to the ground, the LIDAR scanner may be controlled by the trainable agent such that it is moved to a higher, dustfree region before starting measurements, thus avoiding measurement noise due to the dust.

For the purpose of description of the invention, "construction site" may be understood in a broad sense. It may, for example, also comprise pre-fabrication sites or the like, in particular, sites where manipulation tasks on construction objects are to be executed that are the same or at least similar to those of usual construction sites.

The trainable agent may comprise a neural network. Particularly preferred, the trainable agent may comprise a reinforcement learning agent, so that the trainable agent may be trained using feedback. The trainable agent may be configured to, preferably, continuously, self-learn.

The trainable agent may be trained before controlling the sensor, in particular during a separate training phase. Additionally, or alternatively, the trainable agent may be trained continually, in particular while controlling the sensor. To enable continuous learning, a feedback signal may be generated from the sensor data collected by the sensor and, preferably, from sensor data collected by at least one other sensor. The feedback signal may be a measure of quality. It may comprise one or more weighting parameters.

The trainable agent may control the sensor by selecting one or more of the sensors for providing the sensor data. Additionally, or alternatively, the trainable agent may control the sensor by having the sensor repositioned. In particular, the sensor may be actively steered to a point or region of interest for more sophisticated analysis. For example, a grinding robot may, firstly scan a large surface for candidate regions to be possibly ground, wherein the candidate regions may be defined by the trainable agent. Then, the sensor may be moved close to these candidate regions and acquire further data.

The method may be applied to any kind of sensor providing sensor data. The sensor may be at least one of a pose sensor, a velocity sensor, an acceleration sensor, a force and / or torque sensor, an image sensor, or the like.

According to a variant of the method, the sensor is selected by the trainable agent. In particular, in case if a plurality of sensors is available, the trainable agent may be configured to choose one or more sensors of the at least one sensor for providing the sensor data. The trainable agent may in particular be configured to switch the least one sensor on or off. It may also be configured to route sensor data from one or more sensors to a further data processing stage.

As an example, a construction robot having a plurality of image sensors may be configured to use sensor data from a certain image sensor providing the best image quality, e. g. having the least amount of reflections or noise, coming from a certain viewing direction, or the like.

Furthermore, a pose of the sensor may be controlled using the trainable agent. A "pose" may comprise a position and / or an orientation of an object, or, respectively of the sensor. Thus, according to a variant of the method, the sensor may be displaced and / or rotated, in particular in order to optimize the collected data. For the displacement, the sensor may be displaced itself. Additionally, or alternatively, the construction robot comprising the sensor may be displaced and / or rotated.

An important application may be a method of localizing a construction robot, wherein a sensor, e. g. an image sensor and / or a depth image sensor is or are moved towards environments rich of features, which may provide higher localization accuracy. This is particularly interesting for construction sites which, often, provide feature-rich regions, e. g. corners, edges, installations, as well as feature-poor regions, e. g. blank concrete walls. Also, if using an inertial measurement unit (IMU) for position detection, the trainable agent may have the IMU or the construction robot as a whole being moved to or through, at least essentially, vibration-free areas, thus possibly reducing a drift of the IMU.

A class of methods is characterized in that the sensor acquires at least one of image data or depth image data, as for example in the case of vision-based state estimation, such as visual odometry (VO), in particular using a vision-based SLAM algorithm.

The method may comprise a step of semantic classification. In particular, a semantic mask may be created. The semantic mask may assign a meaning to each data point provided by a sensor, for example to each point of an image provided by an image sensor. The trainable agent may classify sensor data into a set of classes, which is then used for controlling the controlled sensor. Additionally, or alternatively, the trainable agent may directly or indirectly control the controlled sensor based on semantically classified data. The set of classes may be fixed or may be generated depending on the analyzed data. The number of different classes may be limited. Alternatively, the number may be indefinite, that is, the classification procedure may assign a quantitative measure to each data point of the sensor data.

At least one of the semantic classes may correspond to a construction site background, e. g. a wall, a ceiling, or a floor, or, in general, an entity generally to be expected to be represented in building information model (BIM) data. At least one of the semantic classes may correspond to a construction site foreground, e. g. clutter, or, in general, an entity generally not to be expected to be represented in BIM data.

The method may comprise at least one of localizing the construction robot, trajectory planning of the construction robot, or mapping of at least a part of the construction site.

The trainable agent may infer an informativeness measure, in particular, a degree to which sensor data acquired could be usable to reach a certain goal. In the example of localization the trainable agent may, for example, be used to distinguish between parts of a scene that are perceptually more informative and other parts of the scene that are perceptually less informative. Then, the sensor may be controlled thus to avoid regions of less informativeness.

The trainable agent may use an actor-critic model.

If the trainable agent comprises a long-short term memory (LSTM) module, a balance between the integrating new experiences and remembering learned behavior may be achieved.

In preferred variants of the method the trainable agent may comprise a reinforcement learning (in the following: RL) agent.

Another aspect of the invention is **a construction robot system** comprising a construction robot, for example for drilling, chiselling, grinding, plastering and/or painting, at least one sensor for acquiring sensor data, and a control unit, characterized in that the control unit comprises a trainable agent, wherein the construction robot system is configured to acquire sensor data using the method according to the invention.

Preferably, the trainable agent may comprise a RL agent. Thus, the trainable agent may be configured for reinforcement learning.

The construction robot system may be configured for working on a construction site, for example for drilling, chiselling, grinding, plastering painting, detecting an object on the construction site, locating the object, moving the object and/or mapping a construction site.

In the present context "construction robot" may be understood in a broad sense. It may, for example, also comprise a sensor-enhanced power tool, wherein a sensor gathers sensor data, e. g. image data or depth image data.

The construction robot system may comprise a mobile construction robot. In particular, the construction robot may comprise at least one mobile base. The at least one mobile base may be configured for moving on a floor, a wall, or a ceiling. The mobile base may be unidirectional, multidirectional or omnidirectional. It may comprise wheels and / or tracked wheels. Alternatively, it may also be or comprise a legged mobile base. Additionally, or alternatively, the construction robot system, in particular the mobile base, may be or comprise an aerial vehicle, in particular an unmanned aerial vehicle configured for construction works, also known as a "construction drone".

The construction robot may have at least one robotic arm. It may also comprise a lifting device for increasing the reach of the at least one robotic arm.

The construction robot system may comprise a plurality of construction robots, in particular a plurality of construction robots. Preferably, the construction robot system is configured such that the construction robots collaborate with one another.

The mobile construction robot may comprise the control unit. The control unit may be, or at least partly, external to the mobile construction robot, thus, the construction robot system may be provided a high amount of computing power. The control unit may be, at least partly, part of a cloud-based computing system. The construction robot system, in particular the construction robot, may have at least one communication interface, preferably a wireless communication interface, for example to communicate with the cloud-based computing system,

The control unit may be configured to control a plurality of mobile construction robots. In particular, the same trainable agent or at least its neural network model may be used for or within a plurality of construction robots and / or construction robot systems. Thus, a training of the trainable agent may be beneficial to several construction robots.

The construction robot system, in particular the mobile construction robot, may comprise as sensor at least one of an image sensor or a depth image sensor. The sensor may be a RGBD sensor, a LIDAR scanner, a monocular image sensor, a stereoscopic image sensor, or the like. It may be mounted on a gimbal.

In a particularly preferred embodiment of the construction robot system the construction robot is configured for grinding. For this, the construction robot may be equipped with a grinding end-effector. It may comprise one or more sensors to analyze a work surface.

The one or more sensors may be controlled by the trainable agent, in particular through an action policy.

The trainable agent may also apply the or a second action policy for controlling motions of the robot and/or the end-effector. The action policy may be based on the sensor data provided by the one or more sensors.

The action policy or the action policies may be learned by trial-and-error. The training may happen using real robots actively and / or passively, e. g. guided by a trainer, performing a grinding task. Additionally, or alternatively, the training may be based on simulations.

The feedback to the learning may be based on a reward function. The reward function may include at least one quality of a grinding result, e. g. a smoothness of the surface, target surface gradient, etc. Optionally, a human operator may give feedback in addition.

A further aspect of the invention is a **computer program product** including a storage readable by a control unit of a construction robot system comprising at least one sensor for acquiring sensor data, the storage carrying instructions which, when executed by the control unit, cause the construction robot to acquire the sensor data using the method according to the invention.

Yet another aspect of the invention concerns a **training method for training a trainable agent** of a control unit of a construction robot system according to the invention, wherein the trainable agent is trained using at least one artificially generated set of sensor data. For example, if the sensor comprises an image sensor, the set of sensor data may comprise an artificially generated 3D scene. The scenes may be photo-realistic, e. g. 3D images of one or more real construction sites. Additionally, or alternatively, the training may use non-photorealistic images.

In order to improve generalizability of the learned action policy noise may be introduced into the artificially generated set of sensor data. The noise may be of Gaussian type. It may have zero mean.

In comparison to purely training-based methods for localization or path planning, the method may require less training data and/or less training time.

By using midlevel representations, in particular a semantic mask, generalization to so-far unknown construction site may be improved.

Advantageously, the algorithm may be used with any semantic segmentation algorithm as long as the semantic algorithm provides a set of semantic classes.

An important area of application of the methods and devices presented is related to path-planning of construction robots. For this, the trainable agent may be trained to identify reliable areas, in particular areas of high informativeness, using semantically labelled images. Semantics may be a valuable source of information for the trainable agent, as drift in pose estimation is generally consistent for areas belonging to the same semantic classes.

The trainable agent may infer an informativeness of a scene in regard to localizability. For example, it may map from a semantic to a perceptual informativeness by assigning importance weights to each semantic class in the scene.

As a result, the method may be applied to a large diversity of environments, in particular construction sites, in particular without, or at least essentially without, fine-tuning to a set of testing environments not experienced at training time.

By this, the method may provide high success rates and a high robustness of localization and navigation on a large variety of construction sites.

Based on the output of the trainable agent, a path planning module may perform trajectory optimization in order to generate a next best action with respect to a current state and a perception quality of the surroundings, essentially guiding the construction robot on its way to a target position such that it tries to avoid regions of reduced informativeness.

In particular, the invention proposes an active perception path-planning algorithm for vision-based navigation based using the trainable agent, guiding the construction robot to reach a predefined goal position while avoiding texture-less or poorly-textured regions. Also, it may be avoided that sensor data is acquired from non-constant regions, e. g. moving objects, for example persons.

Thus, the method presented may dynamically adapt to changes in the construction site due to its training-based, in particular RL-based, active perception.

Furthermore, semantic labeling may be decoupled from path planning, thus improving deployability. Although, in principle, it is possible to learn a mapping directly from raw camera data to perceptual informativeness for each semantic class, this would require an implicit semantic segmentation step, thus requiring long training of an training-based system.

Moreover, the decoupling may reduce the required computing power, thus increasing energy efficiency and reducing costs.

The invention will be described further, by way of example, with reference to the accompanying drawings which illustrate preferred variants thereof, it being understood that the following description is illustrative of and not limitative of the scope of the invention. The features shown there are not necessarily to be understood to scale and are presented in such a way that the special features of the invention are clearly visible. The various features may be realized individually or in combination in any desired way in variants of the invention.

**In the drawings:**

| Figure 1 | schematically shows an overview of the method according to the invention; |
| Figure 2 | schematically shows an overview of a trainable agent and its functioning; |
| Figure 3a and b | show an image used for training and a corresponding semantic mask; |
| Figure 4 | shows a diagram indicating training progress; and |
| Figure 5 | shows a construction robot. |

As far as possible, same reference signs are used for functionally equivalent elements within the description and in the figures.

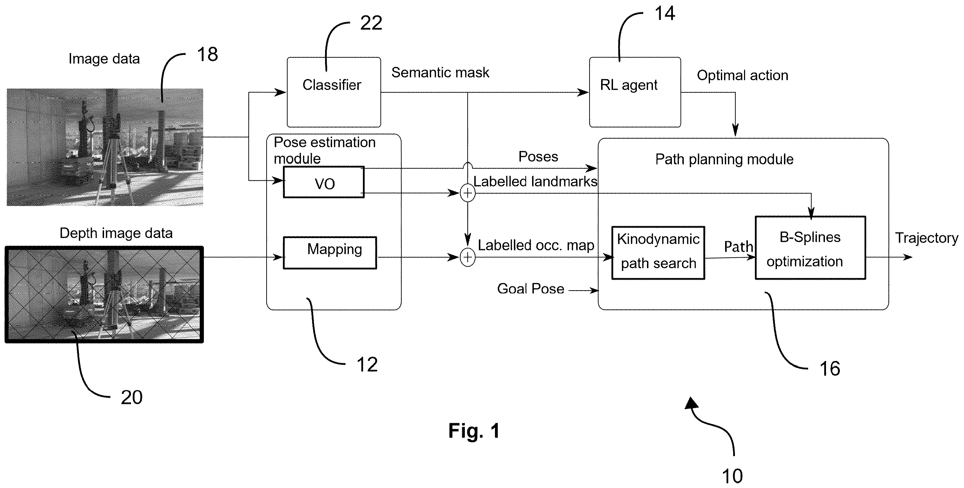

Figure 1 schematically shows an overview of a method **10.**

The method 10 will now be described with reference to an example wherein a construction robot, e. g. a construction drone, uses image data in combination with depth image data as input for navigation. Furthermore, in this example the trainable agent is a RL agent, i. e. the trainable agent is configured for reinforcement learning.

According to this example, the construction robot shall navigate to a target position on a construction site not seen before by the construction robot. The image data and the depth image data are acquired by a plurality of sensors. Due to an output of a trainable agent the trajectory of the construction robot and, thus, of the sensors are adapted such that regions are favored that provide sensor data of high informativeness for localization purposes. In that way, the trainable agent controls the sensors, in particular their poses, in order to keep on track along a trajectory that permits a safe way to the target position on the construction site. The target position may be reached with a high success rate and, in particular, independently of clutter, moving persons, active work zones with reduced visibility, or the like.

The method 10 uses three main modules: a pose estimation module **12,** a trainable agent **14** and a path-planning module **16.**

The pose estimation module 12 takes as input image data **18** from a camera system, e. g. a monocular camera system, and depth image data **20,** e. g. from a depth-sensitive camera system. The image data 18 may preferably consist of RGB image data.

The image data 18 and the depth image data 20 are processed to estimate a pose of a construction robot and to estimate landmarks, in particular 3D landmarks, of the construction site. Furthermore, the pose estimation module 12 generates an occupancy map from the depth image data 20.

A classifier 22 classifies the image data 18 and provides a semantic mask.

The landmarks and the occupancy are assigned point-by-point to semantic classes using the semantic mask.

The trainable agent 14 utilizes the semantic mask to generate an optimal action, which consists of a set of weights to assign to each semantic class.

The optimal action, i. e. the set of weights, is then communicated to the path planning module 16.

Finally, the path planning module 16 generates and outputs an optimal trajectory. For this, it considers the dynamics of the construction robot and perceptional quality.

In more detail:

The image data 18 and the depth image data 20 preferably comprise streams of data.

The pose estimation module 12 generates 3D reconstructions of the surroundings of the construction robot using the depth image data 20, which are, thus, used to generate a dense point cloud. The dense point cloud is stored in an occupancy map employing a 3D circular buffer.

Furthermore, the pose estimation module 12 utilizes a visual odometry (VO) algorithm for estimating the construction robot's pose using the image data 18. In principle, any VO algorithm may be used to estimate the pose of the camera system. In the present example, ORBSLAM (R. Mur-Artal, J. M. M. Montiel, and J. D. Tardós, "ORB-SLAM: a Versatile and Accurate Monocular SLAM System," IEEE Transactions on Robotics, 2015) is used, which is a keyframe-based VO algorithm. It is a vision-only system; thus, the scale may not be retrievable. As will be described further below, the trainable agent 14 may be trained by simulation of artificial scenes, thus giving access to ground-truth information. The ground-truth information may be used to re-scale the estimated position and the 3D landmarks.

Both the occupancy map and the landmarks go through a classification step, in Fig. 1 marked by a "+", providing semantic labels for all the points. These are then fed to the path-planning module 16.

The classifier 22 for generating the semantic mask from the image data 18 may, in principle, be of any suitable kind, e. g. Yolov3 ("Yolov3: An incremental improvement," J. Redmon and A. Farhadi, CoRR, 2018).

The semantic mask also serves as input to the trainable agent 14. The trainable agent 14 outputs an optimal action, which represents values associated with a perceptual informativeness of each semantic class. The optimal action is fed into the path planning module 16.

The path planning module 16 uses the optimal action to reason about a next best action. The optimal action is utilized as a set of weights in the objective function to be optimized by the path planning module 16. This favors tracking and triangulation of points belonging to parts of the scene particularly useful for camera-based state estimation.

**Path planning module**

The next section explains the functioning of the path-planning module 16 in more detail.

One of the objectives is to let the construction robot move through areas well-suited for VO. For this, the construction robot is to learn which semantic classes are less likely to generate a localization drift.

The robot learns this by interacting with the environment, selecting an action, and receiving a reward value as feedback.

Here, an action corresponds to a set of weights for each semantic class in a perception objective function, to be optimized in the path planning module 16. The path planning module 16 uses a kinodynamic $A^*$ path search, followed by a B-Spline trajectory optimization:

1) Kinodynamic path search:

In the first planning step, an aim is to encourage navigation in well-textured areas. The path search is limited to the robot's position in $R^3$. The trajectory is represented as three independent time-parametrized polynomial functions p(t):

$$\mathbf{p}(t) := [p_x(t), p_y(t), p_z(t)]^T, \quad p_d(t) = \sum_{k=0}^{K} a_{d,k} t^k \qquad (1)$$

with $d \in \{x,y,z\}$.

The system is assumed to be linear and time-invariant, and we define the construction robot's state as

$$\mathbf{s}(t) := [\mathbf{p}(t)^T, \dot{\mathbf{p}}(t)^T, \ldots, \mathbf{p}^{(n-1)}(t)^T]^T \in \chi \subset \mathbb{R}^{3n}$$

with control input $u(t) := p^{(n)}(t) \in U := [-u_{max}, u_{max}]^3 \subset R^3$ and $n = 2$, corresponding to a double integrator. Given the current construction robot's state s(t), the control input u(t) and a labelled occupancy map M of the environment, a cost of a trajectory is defined as

$$\mathcal{J}(T) = \int_0^T \left( w_u \|\mathbf{u}(t)\|^2 + \sum_{j=0}^{N} w^j d_M^j(\mathbf{p}(t), \mathcal{M}) \right) dt + w_T T, \quad (2)$$

where $\|u(t)\|^2$ is the control cost; $d_M^j(p(t),M)$ represents a penalty for navigating far away from areas associated to the semantic class $j \in \{0, \cdots, N\}$ with $N$ the total amount of classes; and $T$ is the total time of the trajectory. The terms $w_u$ and $w_T$ are constant weights associated with the respective costs, while the $w^j$ is the weight associated with the semantic class j assigned by the current optimal action. It may be subjected to changes as the construction robot gathers additional experience.

The cost $d_M^j(p(t),M)$ is defined as

$$d_M^j(\mathbf{p}(t), \mathcal{M}) := \sum_{\mathbf{v}_j \in \mathcal{M}_j \subseteq \mathcal{M}} d_v(\mathbf{p}(t), \mathbf{v}_j) =$$

$$\sum_{\mathbf{v}_j \in \mathcal{M}_j \subseteq \mathcal{M}} d_{xy}(\mathbf{p}(t), \mathbf{v}_j) + d_z(\mathbf{p}(t), \mathbf{v}_j), \qquad (3)$$

where $v_j = [v_x, v_y, v_z]^T$ are the voxels of the occupancy map M with semantic label $j$, indicated with $M_j \subseteq$ M. The cost $d^j_M(p(t), M)$ is composed of the two potential functions that are calculated as

$$d_{xy}(\mathbf{p}(t), \mathbf{v}_j) := (p_x(t) - v_x)^2 + (p_y(t) - v_y)^2 \qquad (4)$$

and, by defining $\Delta z := |p_z(t) - v_z|$,

$$d_z(\mathbf{p}(t), \mathbf{v}_j) := d^* \Delta z + \frac{1}{2} \frac{d^{*4}}{\Delta z^2} - \frac{3}{2} d^{*2} \qquad (5)$$

where $d^*$ controls the minimum height of the construction robot with respect to the voxels in $M_j$. In order to speed up the search in the $A^*$ algorithm, a heuristic adapted to match the cost definitions may be used.

2) Trajectory Optimization:

While the trajectory computed in the path-searching step encourages navigation towards informative areas, the trajectory optimization step leverages the additional information given by the landmarks from the VO. A trajectory $\pi(t)$ is parametrized as a uniform B-Spline of degree K.

It is defined as

$$\pi(t) = \sum_{i=0}^{N} \mathbf{q}_i B_{i,K-1}(t) \qquad (6),$$

where $q_i$ are the control points at time $t_i$ with $i \in \{0,...,N\}$, and $B_{i,K-1}(t)$ are the basis functions. Each control point in $\{q_0, q_1, ..., q_N\}$ encodes both the position and the orientation of the construction robot, i.e. $q_i := [x_i, y_i, z_i, \theta_i]^T \in R^4$ with $\theta_i \in [-\pi, \pi)$. The B-Spline is optimized in order to generate smooth, collision-free trajectories, encouraging the triangulation and tracking of high-quality landmarks. For a B-Spline of degree $K$ defined by $N + 1$ control points $\{q_0, q_1, ..., q_N\}$, the optimization acts on $\{q_K, q_{K+1}, ..., q_{N-K}\}$ while keeping the first and last $K$ control points fixed due to boundary constraints. The optimization problem is formulated as a minimization of the cost function

$$\mathcal{F}_{TOT} = \lambda_s \mathcal{F}_s + \lambda_f \mathcal{F}_f + \lambda_c \mathcal{F}_c + \lambda_l \mathcal{F}_l + \lambda_v \mathcal{F}_v \qquad (7),$$

where $F_s$ is a smoothness cost; $F_c$ is a collision cost; $F_f$ is a soft limit on the derivatives (velocity and acceleration) over the trajectory; $F_l$ is a penalty associated with losing track of high-quality landmarks currently in the field of view; and $F_v$ is a soft constraint on the co-visibility between control points of the spline. The coefficients $\lambda_s$, $\lambda_c$, $\lambda_f$, $\lambda_l$ and $\lambda_v$ are the fixed weights associated to each cost.

While maintaining the original cost formulations, similarly to Eq. 2, a novel perception cost that accommodates multiple semantic classes is introduced:

$$\mathcal{F}_l = -\sum_{j=0}^{N} \sum_{l_C \in \mathcal{L}_j^C} w^j \prod_{k=0}^{5} o_k(\mathbf{q}, l_C) \tag{8},$$

where $L^{Cj}$ is the set of 3D landmarks associated to class $j$ expressed in a camera frame C, and $o_k$ a smooth indicator function determining the visibility of landmark $l_C$ from the control pose q.

The optimal set of weights, i. e. the above-mentioned optimal action, for each semantic class is computed in real-time by the trainable agent 14 using a policy modeled as a neural network, which is trained in an episode-based deep RL-fashion.

**Trainable agent**

a) Structure

The trainable agent 14, in this example in the form of a RL agent, maps from semantic masks to optimal actions, employing an Actor-Critic model.

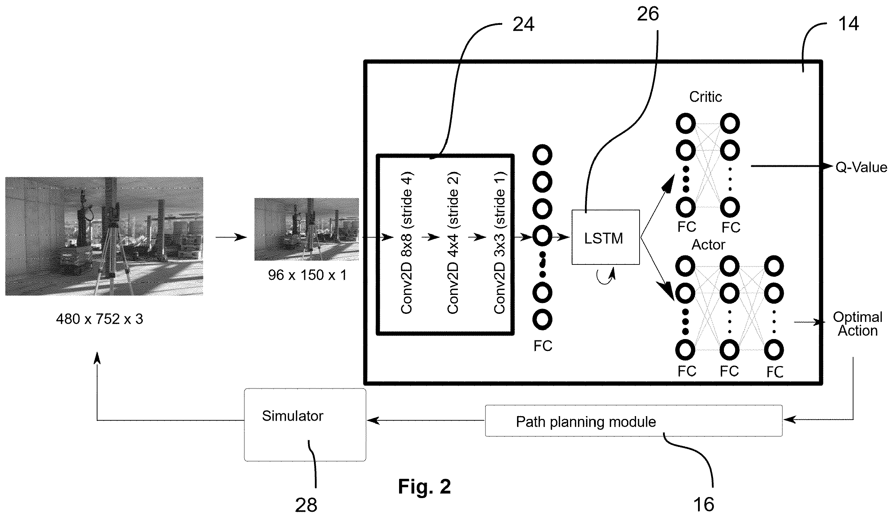

**Figure 2** schematically shows an overview of a trainable agent 14 and its use in the method 10.

As previously described the action consists of the set of optimal weights $w^j \in [0,1]$ with $j \in \{0,\cdots,N\}$ used by the path planning module 16 and according to Eq. 2 and Eq. 8., in which $N$ is the total number of semantic classes.

The Actor and the Critic networks share a first part, composed of a 3-layer Convolutional Neural Network (CNN) module **24,** followed by a Long-Short Term Memory (LSTM) module **26.**

The LSTM module 26 is responsible for the memory of the policy generated and captures spatial dependencies that would otherwise be hard to identify, as some semantic classes can be linked together (e.g. wall and installation object). The final part of the Critic consists of two Fully Connected (FC) layers composed of 64 units, while the optimal action is output by the Actor from three FC layers with 128 units each.

In order to reduce the hyperspace dimension, the color mask may be converted into grayscale. Furthermore, the resulting image may be downsampled. By using such a semantic image as input generalization of the generated policy may be improved. Also, a training may be accelerated and improved.

b) Training

Policy optimization is performed at fixed-step intervals. For this, an on-policy algorithm, e. g. according to J. Schulman, F. Wolski, P. Dhariwal, A. Radford, and O. Klimov, "Proximal Policy Optimization Algorithms," CoRR, 2017, may be used.

The training of the trainable agent 14 or, respectively, of the policy, is performed based on data and rewards collected in each episode.

To reduce the localization error and to increase the chances of getting to the target destination, the reward function received by the trainable agent 14 at step t is defined as

$$R_t(\mathbf{p}(t), e(t)) := R_S + w_E R_E(e(t)) + w_G R_G(\mathbf{p}(t)) \tag{9},$$

where $R_S$ is the survival reward, $R_E$ is associated to the localization error e(t) and $R_G$ to the progress towards the goal position. The survival reward is assigned at every step, unless tracking is lost:

$$R_S := \begin{cases} 0 & \textit{if lost track} \\ 1 & \textit{otherwise} \end{cases} \tag{10}.$$

Note that it is not penalized explicitly when the VO system loses track in order not to penalize promising actions that lead to high errors due to faulty initialization of the visual tracks at the beginning of the episode.

The reward associated to the localization error is instead assigned in every step, and encourages to take actions that reduce the drift in the VO system:

$$R_E(e(t)) := \begin{cases} R_E^{max} & if\ e(t) \leq e_{min} \\ 0 & if\ e(t) \geq e_{max} \\ R_E^{max} exp(-(e(t) - e_{min})) & otherwise \end{cases} \quad (11),$$

where $e_{min}$ and $e_{max}$ are the minimum and the maximum acceptable errors, respectively, and $R_E^{max}$ is the maximum reward value. Finally, the last component of the reward function favors the progress towards the goal position $p_G(t)$ and is inversely proportional to the distance between the current construction robot position and the destination:

$$R_G(\mathbf{p}(t)) := R_G^{max} \frac{1}{\|\mathbf{p}(t) - \mathbf{p}_G(t)\|} \quad (12),$$

where $R_G^{max}$ is the maximum achievable reward value. So, when the construction robot reaches the goal, it receives a final reward equal to $R_G^{max}$.

Thus, at the beginning of an episode, the construction robot is placed at a given starting position, the VO tracking system is initialized, and an end target position is set.

Then, the construction robot navigates towards the target position generating trajectories by optimizing the cost functions defined in Eq. 2 and Eq. 7, given the optimal set of weights output by a current policy.

During movement, the construction robot monitors the localization error. The movement and, thus, the episode, ends when either the target position is reached or the VO system loses track.

In order to maximize the generalization of the learned policy and to avoid overfitting to a specific scene, the trainable agent 14 is trained in a set of randomly generated environments using a simulator comprising a game engine and a robot simulator engine. In this example, which is based on a drone-like construction robot, the "Unity" framework may be used as game engine. The "Flightmare" framework (Song, S. Naji, E. Kaufmann, A. Loquercio, and D. Scaramuzza,"Flightmare: A Flexible Quadrotor Simulator,"Conference on Robot Learning, 2020) may be used as robot simulator engine. In general, the game engine and / or the robot simulator engine may be selected depending on the type of construction site and / or the type of construction robot, e. g. flying robot, legged robot, wheeled robot, robot with tracked wheels, etc., to be trained.

Continuing with the example, the simulated construction drone may be attributed a set of sensors which corresponds to the sensors of the real construction drone. In this example, it is simulated as being equipped with a front-looking camera mounted with a pitch of 60°.

The game engine may, thus, provide the image data 18 required by the VO systems as well as the depth image data 20. Additionally, or as an alternative, photorealistic data, e. g. from photogrammetry, may be used.

In a variant of the method 10, it may also provide the semantic masks. Hence, for the purpose of training, the classifier 22 may not be simulated, but being replaced by calculated semantic masks representing ground-truth.

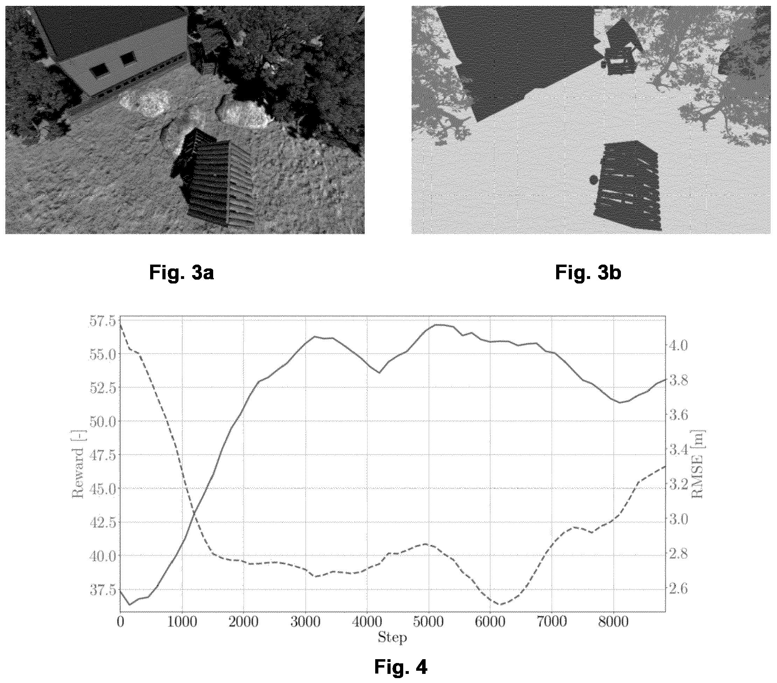

**Figure 3a** shows an example of an artificially generated scene, in this case an outdoor scene having houses and trees. **Figure 3b** shows the corresponding semantic mask representing ground-truth.

Preferably, noise, in particular zero-mean Gaussian noise, may be applied to the depth images in order to mimic the noise in real sensors, such as stereo or depth cameras.

At the beginning of each episode, a new scene is generated, and a target destination is placed randomly in the scene.

The simulated construction drone (virtually) starts navigating towards the target position, and the episode ends when either the goal is reached or the VO system loses track.

The trainable agent 14 outputs actions at fixed time intervals or steps, communicates them to the path planning module 16, and collects the reward as feedback.

In the first episode of the training process, the policy may be initialized randomly. The training continues until a maximum number of steps, for example more than 1000, particularly preferred between 5000 and 10000, e. g. 9000, across all episodes is reached.

The set of semantic classes may be fixed for all scenes. In general, the system, and thus the method 10, can handle any set of classes.

The reward parameters are set to $R_E^{max} = 5$ and $R_G^{max} = 50$, with minimum and maximum localization errors

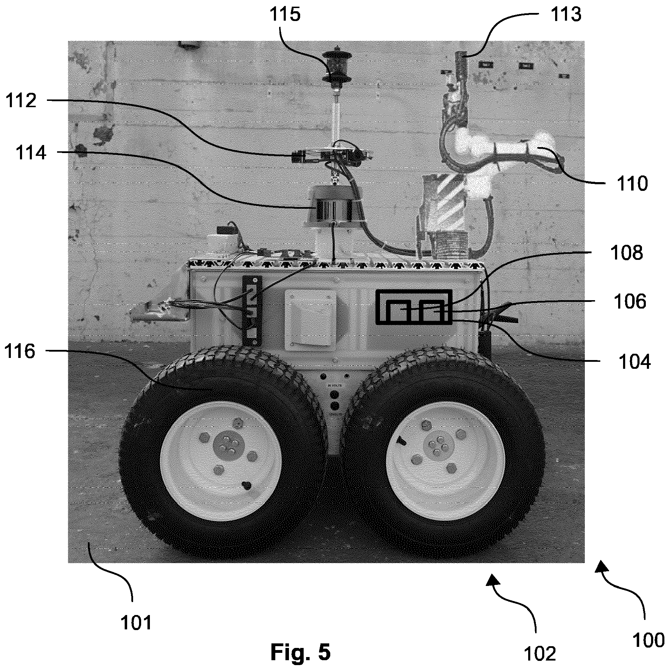

$e_{min}$ = 0.5m and $ema_x$ = 2.5m. To compute the total reward as in Eq. 9, the weights for components associated to the localization error and to the goal-reaching task are set to $w_E$ = 3 and $w_G$ = 0.1, respectively.
An example of training performance of the trainable agent 14 is shown in **figure 5,** which reports reward (full line) and the root mean square error (RMSE, dashed line) of the VO system with respect to ground-truth position over training steps.

As depicted by the initial sharp increase in the reward curve, the trainable agent 14 learns quickly to identify semantic classes that allow robust localization, resulting in a decrease in the pose estimation error. The training performance successively decreases, as visible from the plateau in the reward curve and the small increase in the translational error. Despite the decrease due to slightly higher RMSE, the reward does not drop, as the trainable agent 14 is able to reach the target destination more frequently. This indicates that an optimal behavior is reached and that the oscillations in performance are linked more to a randomness of the scene and consequently, of the VO algorithm's performance.

**Finally, figure 5** shows a construction robot system **100** on a construction site **101,** the construction robot system 100 comprising a mobile construction robot **102** and a control unit **104,** which is schematically represented in figure 5.

In this embodiment, the control unit 104 is arranged inside the mobile construction robot 102. It comprises a computing unit **106** and a computer program product **108** including a storage readable by the computing unit 106. The storage carries instructions which, when executed by the computing unit 106, cause the computing unit 106 and, thus, the construction robot system 102 to execute the method 10 as previously described.

Furthermore, the mobile construction robot 102 comprises a robotic arm **110.** The robotic arm may have at least 6 degrees of freedom. It may also comprise a lifting device for increasing the reach and for adding another degree of freedom of the robotic arm 110. The mobile construction robot 102 may comprise more than one robotic arm.

The robotic arm 110 comprises an end effector, on which a power tool 113 is detachably mounted. The mobile construction robot 102 may be configured for drilling, grinding, plastering and/or painting floors, walls, ceilings or the like. For example, the power tool 113 may be a drilling machine. It may comprise a vacuum cleaning unit for an automatic removal of dust. The robot arm 110 and/or the power tool 113 may also comprise a vibration damping unit.

The robotic arm 110 is mounted on a mobile base **116** of the mobile construction robot 102. In this embodiment, the mobile base 116 is a wheeled vehicle.

Furthermore, the mobile construction robot 102 may comprise a locating mark **115** in the form of a reflecting prism. The locating mark 115 may be used for high-precision localization of the construction robot. This may be particularly useful in case that at least on a part of the construction site 101 a high-precision position detection device, e. g. a total station, is available.

Then, for example, the mobile construction robot 102 may navigate to a target position on that part of the construction site 101 using the method 10. After arriving at the target position a working position, e. g. for a hole to be drilled, may be measured and / or fine-tuned using the high-precision position detection device.

The mobile construction robot 102 comprises a plurality of additional sensors. In particular, it comprises a camera system **112** comprising three 2D-cameras. It further comprises a LIDAR scanner **114.**

It may comprise further modules, for example a communication module, in particular for wireless communication, e. g. with an external cloud computing system (not shown in figure 3).

**Claims**

1. **Method** (10) of acquiring sensor data on a construction site (101) by at least one sensor of a construction robot system (100) comprising at least one construction robot, wherein the sensor is controlled using a trainable agent (14).

2. Method according to claim 1, **characterized in that** the sensor is selected by the trainable agent (14).

3. Method according to one of the preceding claims, **characterized in that** a pose of the sensor is controlled using the trainable agent (14).

4. Method according to one of the preceding claims, **characterized in that** the sensor acquires at least one of image data (18) or depth image data (20).

5. Method according to one of the preceding claims, **characterized in that** the method (10) comprises a step of semantic classification.

6. Method according to one of the preceding claims, **characterized in that** the method (10) comprises at least one of localizing the construction robot, trajectory planning of the construction robot, or mapping of at least a part of the construction site.

7.  Method according to one of the preceding claims, **characterized in that** the trainable agent (14) infers an informativeness measure.

8.  Method according to one of the preceding claims, **characterized in that** the trainable agent (14) uses an actor-critic model.

9.  Method according to one of the preceding claims, **characterized in that** the trainable agent (14) comprises a LSTM module (26).

10. Method according to one of the preceding claims, **characterized in that** the trainable agent (14) comprises a reinforcement learning agent (14).

11. **Construction robot system** (100) comprising a construction robot (102), for example for drilling, chiselling, grinding, plastering and/or painting, at least one sensor for acquiring sensor data, and a control unit (104), **characterized in that** the control unit (104) comprises a trainable agent (14), wherein the construction robot system (100) is configured to acquire sensor data using the method (10) according to one of the preceding claims.

12. Construction robot system according to the preceding claim, **characterized in that** the mobile construction robot (102) comprises as sensor at least one of an image sensor or a depth image sensor.

13. **Computer program product** (108) including a storage readable by a control unit (104) of a construction robot system (100) comprising at least one sensor for acquiring sensor data, the storage carrying instructions which, when executed by the control unit (104), cause the construction robot (102) to acquire sensor data using the method according to one of the claims 1 to 10.

14. **Training method** for training a trainable agent (14) of a control unit (104) of a construction robot system (100) according to one of the claims 10 to 11, wherein the trainable agent (14) is trained using at least one artificially generated set of sensor data.

15. Training method according to the preceding claim, **characterized in that** noise is introduced into the artificially generated set of sensor data.

Fig. 1

**Fig. 2**

480 x 752 x 3

96 x 150 x 1

24

Conv2D 8x8 (stride 4)
Conv2D 4x4 (stride 2)
Conv2D 3x3 (stride 1)

FC

26

LSTM

Critic

FC    FC

→ Q-Value

Actor

FC    FC    FC

Optimal
Action

14

Simulator

28

Path planning module

16

EP 4 088 884 A1

**Fig. 3a**

**Fig. 3b**

**Fig. 4**

Fig. 5

Europäisches
Patentamt

European
Patent Office

Office européen
des brevets

# EUROPEAN SEARCH REPORT

**Application Number**

EP 21 17 3491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/142496 A1 (ABB SCHWEIZ AG [CH]; TENG ZHOU [US] ET AL.) 9 July 2020 (2020-07-09) * page 24, line 3 - page 29, line 3 * ----- | 1-15 | INV. B25J9/16 B25J5/00 G05D1/02 G06N20/00 |
| X | US 2019/370689 A1 (ANDO TANICHI [JP] ET AL) 5 December 2019 (2019-12-05) * paragraph [0089] - paragraph [0127]; figures 6-9 * ----- | 1-15 | |

**TECHNICAL FIELDS SEARCHED (IPC)**

B25J
G05B

The present search report has been drawn up for all claims

| Place of search | Date of completion of the search | Examiner |
|---|---|---|
| The Hague | 5 November 2021 | Tsirigkas, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 17 3491

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2021

| Patent document cited in search report | | Publication date | Patent family member(s) | | Publication date |
|---|---|---|---|---|---|
| WO 2020142496 | A1 | 09-07-2020 | NONE | | |
| US 2019370689 | A1 | 05-12-2019 | CN | 110235137 A | 13-09-2019 |
| | | | US | 2019370689 A1 | 05-12-2019 |
| | | | WO | 2018154359 A1 | 30-08-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. MUR-ARTAL ; J. M. M. MONTIEL ; J. D. TAR-DÓS.** ORB-SLAM: a Versatile and Accurate Monocular SLAM System. *IEEE Transactions on Robotics,* 2015
- **J. REDMON ; A. FARHADI.** Yolov3: An incremental improvement. *CoRR,* 2018
- **J. SCHULMAN ; F. WOLSKI ; P. DHARIWAL ; A. RADFORD ; O. KLIMOV.** Proximal Policy Optimization Algorithms. *CoRR,* 2017
- **SONG ; S. NAJI ; E. KAUFMANN ; A. LOQUERCIO ; D. SCARAMUZZA.** Flightmare: A Flexible Quadrotor Simulator. *Conference on Robot Learning,* 2020